# EUROPÄISCHE PATENTANMELDUNG

(11) **EP 1 523 871 A1**
(43) Veröffentlichungstag der Anmeldung: **20.04.2005**
(21) Anmeldenummer: 04024689.4
(22) Anmeldetag: 15.10.2004
(51) Int. Cl.: A01B 1/24, A01G 1/08

(54) **Gartengerät zur Bearbeitung von Bodenflächen**

(30) Priorität: 15.10.2003 DE 20316074 U
(71) Anmelder: Steffens, Sandra, 21465 Reinbek (DE)
(72) Erfinder: Steffens, Sandra, 21465 Reinbek (DE)
(74) Vertreter: Heun, Thomas, Dipl.-Ing.

(57) **Zusammenfassung**

Es wird ein Gartengerät zur Bearbeitung von Bodenflächen wie insbesondere Rasen- oder Beetflächen beschrieben, das sich insbesondere dadurch auszeichnet, dass es ein die zu bearbeitende Bodenfläche umschließendes Element umfasst, das vorzugsweise an mindestens einer Seite geöffnet werden kann und mindestens einen Schenkel (11,21) aufweist, mittels dem eine Grenzlinie in die Bodenfläche eingebracht werden kann. Damit können in besonders einfacher Weise gekrümmt verlaufende Grenzlinien zwischen unterschiedlichen Bereichen wie zum Beispiel Beeten und Rasenflächen sauber abgestochen werden.

## Beschreibung

Die Erfindung betrifft ein Gartengerät zur Bearbeitung von Bodenflächen wie insbesondere Rasen- oder Beetflächen.

Bei der Bearbeitung von Bodenflächen dieser Art besteht häufig die Notwendigkeit, bestimmte Bereiche einer solchen Fläche entlang einer Grenzlinie mit einem vorgegebenen Verlauf von anderen Bereichen abzugrenzen.

Ein typisches Beispiel hierfür sind die oben genannten Rasen- und Beetflächen. Die an eine Beetfläche angrenzende Rasenkante muss dabei bekanntlich in regelmäßigen Zeitabständen abgestochen werden, um zu verhindern, dass Gras oder Unkraut in die Beetfläche hineinwächst und die Kante unsauber wird.

Das Abstechen kann insbesondere dann schwierig und mühsam sein, wenn die Grenzlinie einen gekrümmten Verlauf z. B. in Form eines Halb- oder Vollkreises hat, da ein solcher Verlauf mit einem Spaten im allgemeinen nur unvollkommen nachgezogen werden kann.

Eine Aufgabe, die der Erfindung zugrunde liegt, besteht deshalb darin, ein Gartengerät zur Bearbeitung von Bodenflächen zu schaffen, mit dem in relativ einfacher Weise insbesondere gekrümmt verlaufende Grenzlinien zwischen unterschiedlichen Bereichen in die Bodenfläche eingebracht werden können.

Mit der Erfindung soll insbesondere ein Gartengerät geschaffen werden, mit dem Grenzlinien insbesondere in Form von Kreisbögen, wie Halb- oder Vollkreisen, in eine Bodenfläche eingebracht werden können, um zum Beispiel eine Rasenfläche von einer Beetfläche abzugrenzen.

Gelöst wird die Aufgabe mit einem Gartengerät zur Bearbeitung von Bodenflächen mit einem einen Bereich der Bodenfläche zumindest im wesentlichen umschließenden Element, das mindestens einen ersten Schenkel aufweist, mittels dem eine Grenzlinie in die Bodenfläche eingebracht werden kann.

Ein besonderer Vorteil dieser Lösung besteht darin, dass das Gartengerät mit relativ geringen Kosten und - je nach Verlauf und Krümmung der Grenzlinie - in nahezu beliebigen Abmessungen hergestellt werden kann.

Wenn außerdem das Element einen geschlossenen Ring bildet, der an mindestens einer Seite geöffnet werden kann, oder nach Anspruch 2 ausgebildet ist, kann es zum Beispiel auch um einen Baumstamm gelegt werden, um die diesen umgebende Bodenfläche zu bearbeiten bzw. abzustechen.

Die Unteransprüche haben vorteilhafte Weiterbildungen der Erfindung zum Inhalt.

Die Ausführung gemäß Anspruch 3 hat den Vorteil, dass sie mit relativ geringem Materialaufwand gegebenenfalls auch aus Kunststoff besonders stabil hergestellt werden kann.

Bei der Ausführung gemäß Anspruch 4 wird die Grenzlinie entlang der innerhalb der umschlossenen Fläche liegenden Seite des Schenkels eingebracht.

Die Ausführung gemäß Anspruch 5 setzt sich aus zwei Teilen zusammen, die besonders einfach miteinander verbunden werden können.

Die Materialauswahl und Bemessung gemäß der Ansprüche 6, 7 und 8 hat den Vorteil einer besonders hohen Stabilität bei geringem Materialaufwand.

Die Ansprüche 9 und 10 beschreiben zwei Ausführungen, die zum Einbringen der Grenzlinie in unterschiedlicher Weise ausgebildet sind.

Weitere Einzelheiten, Merkmale und Vorteile der Erfindung ergeben sich aus der folgenden Beschreibung einer bevorzugten Ausführungsform anhand der Zeichnung. Es zeigt:
Fig. 1 eine Ansicht des Gartengerätes in demontiertem Zustand; und
Fig. 2 das Gartengerät in zusammengebautem Zustand.

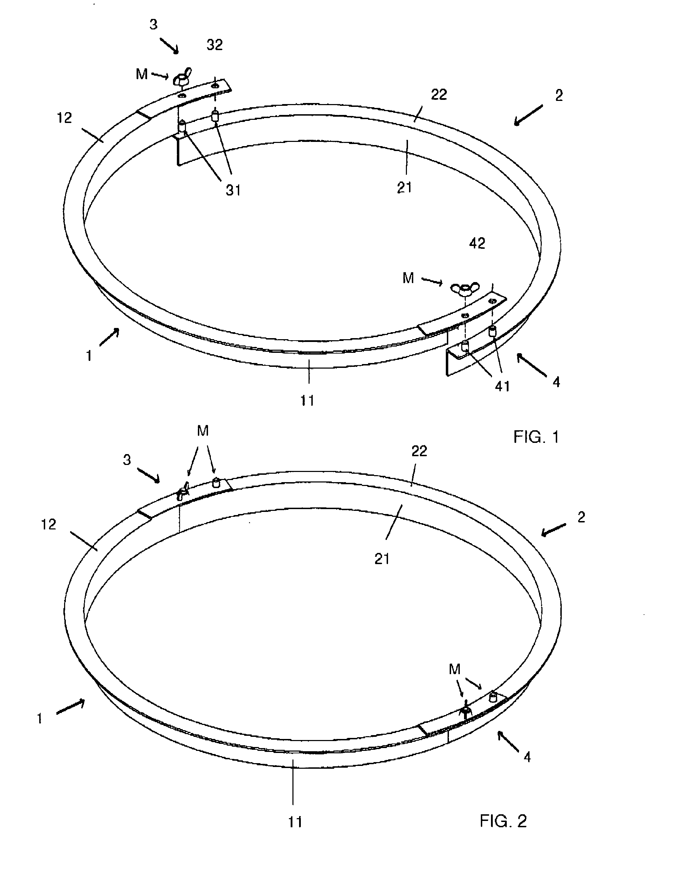

Figur 1 zeigt das Gartengerät in teilweise demontiertem Zustand. Aus dieser Darstellung wird deutlich, dass es sich aus einem ersten kreisbogenförmigen Teil (Halbring) 1 und einem zweiten kreisbogenförmigen Teil (Halbring) 2 zusammensetzt, die in montiertem Zustand in Figur 2 gezeigt sind.

Die beiden Halbringe 1, 2 sind jeweils Winkelprofile mit einem ersten Schenkel 11; 21 und einem zweiten Schenkel 12; 22, die jeweils einen Winkel von etwa 90 Grad einschließen. Wie in den Figuren zu erkennen ist, erstreckt sich in diesem Fall der jeweils zweite Schenkel 12, 22 in der Ebene der durch die Winkelprofile aufgespannten Kreisfläche in radialer Richtung nach außen, während der jeweilige erste Schenkel 11, 21 vertikal nach unten weist.

Der zweite Schenkel 12; 22 hat dabei zum Beispiel eine Breite von etwa 30 mm, während der erste Schenkel 11; 21 eine Breite von zum Beispiel etwa 50 mm aufweist. Die Winkelprofile sind somit vorzugsweise ungleichschenkelig.

Das Material, aus dem die beiden Halbringe 1, 2 gefertigt sind, ist vorzugsweise ein Metall, insbesondere Stahl, das verzinkt sein kann, um ein Rosten zu verhindern. Alternativ dazu kann auch ein gegebenenfalls flexibles Kunststoffmaterial verwendet werden.

Wie insbesondere aus Figur 1 deutlich wird, werden die beiden Halbringe 1, 2 an ihren beiden Enden mit Hilfe jeweils eines Verbindungselementes 3, 4 in Form eines Flachstückes bzw. Flacheisens miteinander verbunden. Die Verbindungselemente 3, 4 sind in der Darstellung der Figur 1 an dem zweiten Schenkel 12 des ersten Halbrings 1 zum Beispiel durch Kleben oder Schweißen befestigt. Die Verbindungselemente 3, 4 haben eine Breite, die im wesentlichen der Breite des zweiten Schenkels 12 entspricht und weisen entlang ihrer Länge im wesentlichen die gleiche Krümmung wie die beiden Halbringe 1, 2 auf.

Wie in Figur 1 ferner zu erkennen ist, befinden sich auf dem zweiten Schenkel 22 des zweiten Halbrings 2 an dessen beiden Enden jeweils zwei Gewindestifte 31, 41. Beim Zusammensetzen der beiden Halbringe 1, 2 werden diese Gewindestifte 31, 41 durch in die Verbindungselemente 3, 4 eingebrachte Bohrungen 32, 42 geführt. Durch Aufschrauben von Muttern M, vorzugsweise Flügelmuttern, auf die Gewindestifte 31, 41 werden die beiden Halbringe 1, 2 schließlich aneinander fixiert. Figur 2 zeigt diesen montierten Zustand, in dem das Gartengerät einen geschlossenen Kreis bildet.

Mit diesem Gartengerät kann zum Beispiel in einer Rasenfläche ein kreisförmiges Beet abgestochen werden. Wenn sich in dem Beet ein Baum mit einer ausladenden Krone befindet, werden die beiden Halbringe 1, 2 in demontiertem Zustand um den Baum gelegt und dann zusammengesetzt.

Nun wird ein Messer oder eine Klinge o.ä. an der Kreis-inneren Seite der ersten Schenkel 11, 21 in den Boden gedrückt und entlang der ersten Schenkel durch den Boden gezogen. Der erste Schenkel dient dabei als Schablone und Führung. Mit dem Messer wird auf diese Weise die Grassode bzw. das zu beseitigende Unkraut in vertikaler Richtung durchtrennt. Anschließend wird der erste Schenkel 11, 21 des Rings mit der Hand oder dem Fuß in die mit dem Messer in den Boden eingebrachte Fuge gedrückt.

Bei entsprechender Bodenbeschaffenheit bzw. Bemessung und Festigkeit des ersten Schenkels 11, 21 kann dieser gegebenenfalls auch ohne Anwendung eines Messers in den Boden eingedrückt werden. Sofern erforderlich, können anschließend tiefer liegende Teile der Grassode oder der Wurzeln mit einem Messer durchtrennt werden, indem dieses wie oben erläutert entlang der ersten Schenkel 11, 21 geführt wird.

Anschließend können nun noch die innerhalb des Kreises liegenden Teile der Grassode bzw. des Unkrauts wiederum durch Führen des Messers (oder eines anderen scharfen Gegenstandes) in im wesentlichen horizontaler Richtung von innerhalb des Kreises gegen die ersten Schenkel 11, 21 herausgeschnitten werden. Die Schenkel dienen hierbei wiederum zur Führung des Messers.

Das erfindungsgemäße Gartengerät kann mit nahezu beliebigen Abmessungen hergestellt werden. Für einen typischen Ringdurchmesser von zum Beispiel 700 mm weist der zweite Schenkel 12, 22 insbesondere eine Breite von 30 mm und der erste Schenkel 11, 21 insbesondere eine Breite von 50 mm auf. Als Material kann zum Beispiel rostfreier Stahl (Edelstahl) oder ein anderes, zum Beispiel auch verzinktes Metall wie zum Beispiel Aluminium verwendet werden, wobei für das Metall bei den genannten Maßen eine Stärke von etwa 3 mm ausreichend ist und damit eine besonders sichere und einfache Handhabung möglich ist. Alternativ dazu kann das Gartengerät jedoch auch aus Kunststoff, Holz oder anderen Materialien hergestellt werden.

Zur Befestigung der beiden Halbringe 1, 2 aneinander sind ebenfalls verschiedene Alternativen denkbar. Anstelle der Gewindestifte 31, 41 und der Muttern M könnte zum Beispiel auch eine Steckverbindung gewählt werden.

Weiterhin ist es auch nicht unbedingt erforderlich, dass die beiden Halbringe 1, 2 jeweils einen Halbkreis bilden. Das Gartengerät könnte sich zum Beispiel auch aus einem ersten Halbring 1, der einen Dreiviertel-Kreisbogen bildet, und einem zweiten Halbring 2, der einen Viertel-Kreisbogen darstellt, zusammensetzen. Eine solche oder anderer abweichende Bemessungen können insbesondere dann vorteilhaft sein, wenn die beiden Halbringe auch unabhängig voneinander verwendet werden sollen, um Bodenflächen mit einer entsprechenden Linienführung, zum Beispiel an Wegebiegungen, abzustechen.

Darüberhinaus kann das Gartengerät auch die Form eines Ovals oder eine rechteckige oder eine andere Form einschließen und sich dementsprechend aus einem oder mehreren geraden und/oder gekrümmten Abschnitten zusammensetzen.

In allen Fällen ist es natürlich auch möglich, das Gartengerät aus mehr als zwei Teilen zusammenzusetzen, die jeweils eine Kreisbogenform oder eine andere der genannten, geraden und/oder gekrümmte Formen aufweisen.

## Patentansprüche

1. Gartengerät zur Bearbeitung von Bodenflächen mit einem einen Bereich der Bodenfläche zumindest im wesentlichen umschließenden Element, das mindestens einen ersten Schenkel (11, 21) aufweist, mittels dem eine Grenzlinie in die Bodenfläche eingebracht werden kann.

2. Gartengerät nach Anspruch 1,
mit zwei zumindest im wesentlichen kreisbogenförmigen Teilen (1, 2), die lösbar zu einem ringförmigen Element zusammensetzbar sind.

3. Gartengerät nach Anspruch 1,
bei dem das Element durch mindestens ein Winkelprofil mit dem ersten Schenkel (11,21) und einem zweiten Schenkel (12, 22) gebildet ist, wobei die Schenkel einen Winkel von etwa 90 Grad einschließen.

4. Gartengerät nach Anspruch 3,
bei dem sich die zweiten Schenkel (12, 22) in der Ebene der durch die Elemente aufgespannten Fläche in radialer Richtung nach außen erstrecken.

5. Gartengerät nach Anspruch 2,
bei dem an den beiden Enden eines der kreisbogenförmigen Teile (1) jeweils ein Befestigungselement (3, 4) in Form eines den zweiten Schenkel (12) fortsetzenden Flachstücks befestigt ist, und an den beiden Enden des anderen kreisbogenförmigen Teils (2) jeweils mindestens ein Gewindestift (31, 41) angeordnet ist, die sich in zusammengesetztem Zustand der Teile (1, 2) durch korrespondierende Bohrungen in dem jeweiligen Flachstück erstrecken und auf die zur Montage des Gartengerätes jeweils eine Mutter (M) aufschraubbar ist.

6. Gartengerät nach einem der vorhergehenden Ansprüche,
bei dem die kreisbogenförmigen Teile (1, 2) aus einem Metall gefertigt sind.

7. Gartengerät nach Anspruch 6,
bei dem das Metall eine Stärke von etwa 3 mm aufweist.

8. Gartengerät nach Anspruch 3,
bei dem die ersten Schenkel (11, 21) eine Breite von etwa 50 mm und die zweiten Schenkel (12, 22) eine Breite von etwa 30 mm aufweisen.

9. Gartengerät nach Anspruch 1,
bei dem der erste Schenkel (11, 21) so ausgebildet ist, dass die Grenzlinie mit Hilfe eines an einer Seite des ersten Schenkels geführten und in die Bodenfläche gedrückten Messers oder einer Klinge eingebracht werden kann.

10. Gartengerät nach Anspruch 1,
bei dem der erste Schenkel (11, 21) so ausgebildet ist, dass die Grenzlinie durch Drücken des ersten Schenkels in die Bodenfläche eingebracht werden kann.
